(19) Europäisches Patentamt

European Patent Office

Office européen des brevets

(11) Veröffentlichungsnummer: **0 258 478 B1**

(12) **EUROPÄISCHE PATENTSCHRIFT**

(45) Veröffentlichungstag der Patentschrift: **15.01.92**

(21) Anmeldenummer: **86112187.9**

(22) Anmeldetag: **03.09.86**

(51) Int. Cl.⁵: **F16C 13/00**, D21G 1/02

(54) **Deformationsregelwalze.**

(43) Veröffentlichungstag der Anmeldung:
**09.03.88 Patentblatt 88/10**

(45) Bekanntmachung des Hinweises auf die
Patenterteilung:
**15.01.92 Patentblatt 92/03**

(84) Benannte Vertragsstaaten:
**AT BE CH DE FR GB IT LI LU NL SE**

(56) Entgegenhaltungen:
**EP-A- 0 115 790      EP-A- 0 237 437
DE-A- 2 230 139      DE-A- 2 420 324
DE-A- 2 608 646      DE-A- 3 011 669
DE-A- 3 022 491      DE-A- 3 126 492
FR-A- 1 536 535      FR-A- 2 572 313
FR-A-22 458 65       GB-A- 2 042 125
US-A- 3 131 625      US-A- 3 587 152**

(73) Patentinhaber: **Kleinewefers GmbH
Kleinewefersstrasse 25
W-4150 Krefeld 1(DE)**

(72) Erfinder: **Pav, Josef, Dr.
Eichhornstrasse 36c
W-4150 krefeld(DE)**

(74) Vertreter: **Knoblauch, Ulrich, Dr.-Ing.
Kühhornshofweg 10
W-6000 Frankfurt am Main 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 258 478 B1

**Beschreibung**

Die Erfindung bezieht sich auf eine Deformationsregelwalze nach dem Oberbegriff des Anspruchs 1.

Bei einer bekannten Konstruktion dieser Art (DE-AS 22 30 139) hat die Lagerfläche von vornherein eine begrenzte Abmessung in Umfangsrichtung. Die Abstützung ist auf einen kleinen Bereich zu beiden Seiten der Wirkebene beschränkt. Bei einer Ausführungsform sind Lagerfläche und Kolbenquerschnitt kreisförmig, bei einem anderen Ausführungsbeispiel rechteckig mit einer sich axial erstreckenden Größtabmessung.

Bei einer anderen bekannten Walze (US-PS 31 31 625) erstrecken sich die Lagersegmente über einen Bogenwinkel von mehr als 90°. Die Verbindung zwischen dem zylindrischen Kolben des Druckgebers und dem Lagersegment erfolgt über einen Zapfen, der einen geringeren Durchmesser hat als der Kolben. Alle Druckgeber werden mit dem gleichen Druck beaufschlagt. Die Lagerfläche ist in eine Vielzahl kleiner Lagertaschen unterteilt, von denen eine mittlere Tasche mit hydrostatischem Druckmittel versorgt wird. Der Walzenmantel ist vergleichsweise dünn.

Bei dieser Konstruktion tragen die beiden äußeren Endabschnitte jedes Lagersegments nur sehr wenig zum Abstützen des Walzenmantels bei. Denn diese Endabschnitte können sich leicht verformen. Die eigentliche Abstützung erfolgt daher im wesentlichen nur in dem von der Wirkebene durchsetzten Mittelabschnitt des Lagersegments.

Bei den vorgenannten Walzen ist die pro Längeneinheit der Walze aufbringbare Streckenlast durch den vorgebenen oder technisch realisierbaren hydraulischen Arbeitsdruck begrenzt. Bei der kreisförmigen Lagerfläche kann man zwar den Querschnitt des Kolbens vergrößern. Dies hat aber zur Folge, daß auch in Achsrichtung mehr Platz benötigt wird und weniger Lagersegmente plaziert werden können. Je größer aber die Axialerstreckung, um so weniger ist eine feinfühlige Steuerung der Deformation möglich. Bei großer Axialerstreckung, wie sie bei der rechteckigen Lagerfläche vorhanden ist, kann überhaupt keine separate Steuerung einzelner Axialabschnitte vorgenommen werden. Bei einer solchen Abstützung können auch keine dünneren, die Anpassungsfähigkeit an eine Nachbarwalze gewährleistenden Walzenmäntel verwendet werden, da eine Verformung und Überbelastung in Umfangsrichtung zu befürchten ist.

Es ist ferner bekannt, zwei Reihen von in Umfangsrichtung versetzten Lagersegmenten vorzusehen, bei denen der Kolben des jeweiligen Druckgebers radial bewegbar ist (US-PS 35 87 152). Hierbei ist aber der Walzenmantel in der Wirkebene überhaupt nicht unterstützt. Auch wenn man zwischen den beiden Reihen zusätzlich eine mittlere Reihe von Lagersegmenten anordnet (EP-OS 115 790), können die von den äußeren Reihen übertragenen Kräfte nur über den Walzenmantel in die Wirkebene gelangen, was zu unerwünschten Verformungen führt.

Diese Nachteile treten nicht auf, wenn man gemäß einer weiteren bekannten Walze (DE-PS 30 22 491) jedem Lagersegment, das eine größere Umfangslänge als die axiale Breite hat, zwei oder mehr in Umfangsrichtung versetzte, zueinander parallele Druckgeber zuordnet. Bei dieser Konstruktion können verhältnismäßig große Streckenlasten pro Längeneinheit auf den Walzenmantel aufgebracht werden, weil das Lagersegment eine Art Brücke zwischen den benachbarten Druckgebern bildet, die über ihre gesamte Umfangslänge, also auch in ihrer Mitte, starke Stützkräfte an den Walzenmantel abzugeben vermag. Infolgedessen können auch Walzenmäntel mit geringer Wandstärke verwendet werden, ohne daß eine unzulässige Verformung in Umfangsrichtung erfolgt. Wenn diese Lagersegmente mit parallelen Seitenwänden ausgestattet sind, können sie eng nebeneinander angeordnet werden, so daß eine feinfühlige Steuerbarkeit der Streckenlast möglich ist. Jedes dieser brückenartigen Lagersegmente muß mechanisch eine ausreichende Steifigkeit haben, damit es sich nicht unter dem Einfluß der auftretenden Kräfte verformt und hierdurch Abstützschwierigkeiten auftreten.

Aus FR-A-22 45 865 ist es bekannt, einem mit einer Kolbenstange versehenen Kolben einen elliptischen Querschnitt zu geben, um einen rechteckigen Raum besser ausnutzen zu können.

Der Erfindung liegt die Aufgabe zugrunde, eine Deformationsregelwalze der eingangs beschriebenen Art derart weiterzubilden, daß im Betrieb hohe Streckenlasten aufgebracht werden können.

Diese Aufgabe wird erfindungsgemäß durch die Merkmale des Anspruchs 1 gelöst.

Bei dieser Ausgestaltung ist das Lagersegment nicht nur in der Mitte oder an in Abstand angeordneten Stellen vom Druckgeber abgestützt, sondern durchgehend über den weitaus größten Teil der Umfangslänge. Bei dieser Belastungsart ist das Lagersegment ein Träger mit weitgehend konstanter Steifigkeit. Es lassen sich daher außerordentlich hohe Drücke aufbringen, ohne daß eine unzulässige Verformung des Lagersegments zu befürchten ist. Oder es kann bei geringeren Drücken Material am Lagersegment gespart werden. Für eine gegebene axiale Breite des Lagersegments ist die druckwirksame Querschnittsfläche größer als in allen anderen bekannten Fällen. Beide Maßnahmen ermöglichen für sich und erst recht in Kombination das Aufbringen hoher Streckenlasten pro Längeneinheit der Walze. Da die Lagersegmente in Axialrichtung schmal sind, ergibt sich eine feinfühlige Steuerung der Streckenlast und damit der Walzendeformation. Man kann mit dünnwandigen Walzen arbeiten, da sie über einen größeren Teil ihres Umfangs auf steifen Lagersegmenten abgestützt sind.

Die neue Walze eignet sich insbesondere in der Papierfabrikation für sehr hohe Streckenlasten, desweiteren beim Einsatz in Kalandern bzw. Walzwerken für Kunststoff, Gummi, Folien und Warenbahnen in der Aluminium- und der Stahlherstellung.

Besonders günstig ist es, wenn Kolben und Zylinder in Umfangsrichtung verlaufende parallele Seitenwandflächen aufweisen. Die einzelnen Druckgeber können daher verhältnismäßig dicht nebeneinander angeordnet werden. Die Fabrikation ist einfach. Auch die Abdichtung bereitet keine Schwierigkeiten.

Die Seitenwandflächen von Kolben und Zylinder können durch halbzylindrische Endflächen miteinander verbunden sein. Auch dies erleichtert die Herstellung und die Abdichtung.

Eine Alternative besteht darin, die Seitenwandflächen von Kolben und Zylinder im wesentlichen durch zur Trägerachse parallele Endflächen miteinander zu verbinden. Hierdurch erhält man bei gegebener Umfangslänge eine noch größere Druckfläche.

Zweckmäßigerweise ist die Querschnittsform von Kolben und Zylinder in Form und Größe der Lagerfläche des Lagersegments angepaßt. Das Lagersegment wird daher über seine gesamte Umfangslänge durchgehend von innen und durchgehend oder nahezu durchgehend von außen belastet.

Vorzugsweise sind zumindest über einen Teil der Länge des Trägers auf der den Lagersegmenten gegenüberliegenden Trägerseite sekundäre Lagersegmente vorgesehen. Sind auch die sekundären Lagersegmente mit Druck versorgt, wird der Walzenmantel derart eingespannt, daß auf ihn wirkende Querkräfte über die Lagersegmente und die Druckgeber auf den Träger abgeleitet werden können.

Bei einer bevorzugten Ausführungsform ist der Kolben jeweils am Träger und der Zylinder am Lagersegment vorgesehen. Dies führt zu einem verhältnismäßig flachen und daher materialarmen Lagersement, das aber tratzdem im Betrieb wegen der durchgehenden Unterstützung vom Druckpolster des Druckgebers eine hohe und konstante Steifigkeit hat. Außerdem braucht der Träger nicht durch verhältnismäßig große, als Zylinder dienende Aussparungen geschwächt zu werden.

Zweckmäßigerweise ist der die Druckgeber beaufschlagende Druck einzeln oder zonenweise veränderbar. Auf diese Weise erhält man eine feinfühlige Steuerung in allen axial nebeneinanderliegenden Bereichen des Walzenmantels.

Da es die neue Walze ermöglicht, jeweils mit der für einen vorgegebenen Druck höchsten Streckenlast pro Längeneinheit zu arbeiten, empfiehlt sie sich besonders dann, wenn die den Lagersegmenten zugeführte Druckflüssigkeit ein Heizmedium ist. Während man bei kaltem Drucköl Drücke von 80 bis 500 bar anwenden kann, liegt bei heißem Drucköl die obere Grenze bei etwa 12 bis 20 bar, weil andernfalls die Pumpen, Dichtungen u.dgl. versagen. Erfindungsgemäß kann daher eine beheizte Walze mit hoher Streckenlast betrieben werden.

Die Erfindung wird nachstehend anhand in der Zeichnung dargestellter, bevorzugter Ausführungsbeispiele näher erläutert. Es zeigen:

Fig. 1     einen Teil einer erfindungsgemäßen Walze, teilweise im Längsschnitt, teilweise in Längsansicht, wobei einige Lagersegmente vom Kolben abgenommen sind,

Fig. 2     einen Querschnitt längs der Linie A-A in Fig. 1,

Fig. 3     einen Längsschnitt durch den Walzenmantel und eine Teilansicht gemäß der Linie B-B in Fig. 1 auf den Träger,

Fig. 4     eine zweite Ausführungsform in der Darstellung der Fig. 1 und

Fig. 5     die zweite Ausführungsform in der Darstellung der Fig. 2.

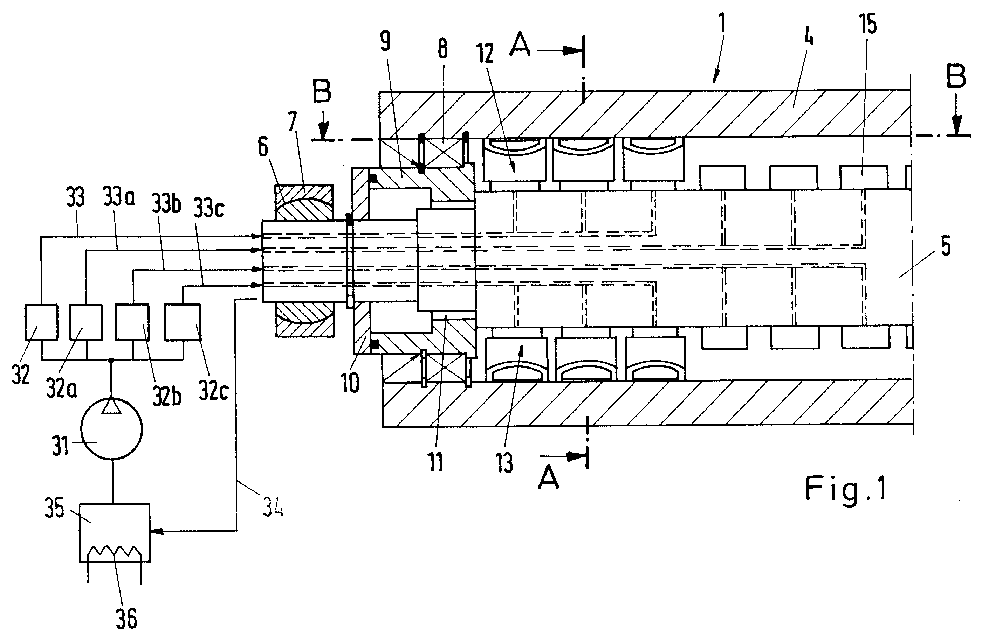

Bei der Ausführungsform der Fig. 1 bis 3 arbeitet eine Walze 1 unter Bildung eines Arbeitsspalts 2 mit einer Gegenwalze 3 zusammen, beispielsweise in einem Walzwerk oder einem Kalander. Ein Walzenmantel 4 ist drehbar um einen Träger 5 gelagert, der an beiden Enden über ein Schwenklager 6 drehfest an einem Ständer 7 gehalten ist. Die Enden des Walzenmantels 5 sind über ein Wälzlager 8 auf einer Lagerbuchse 9 gelagert. Diese Buchse ist durch eine nicht veranschaulichte Drehmomentenstütze gegen Drehung gesichert und liegt abgedichtet gegen eine drehfest am Träger 5 befestigte Dichtscheibe 10 an. Wegen eines Spalts 11 zwischen Träger und Lagerbuchse kann diese wenigstens in der Wirkebene E, welche den Arbeitsspalt 2 durchsetzt, radial relativ zum Träger 5 bewegt werden.

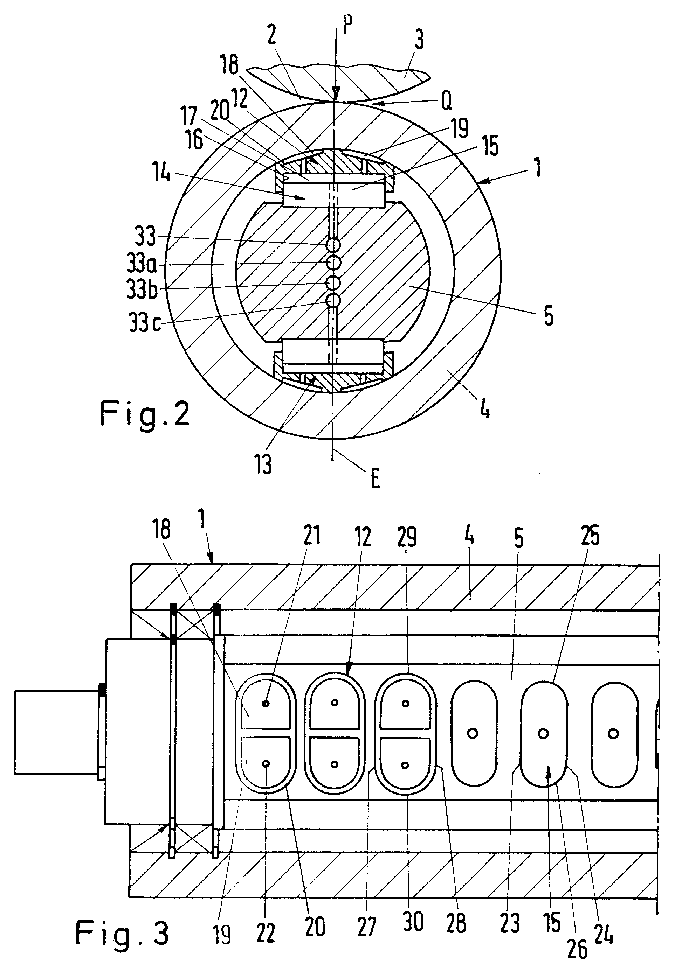

Der Walzenmantel 4 ist durch eine erste Reihe von Lagersegmenten 12 abgestützt, die symmetrisch zur Wirkebene E angeordnet sind. Auf der gegenüberliegenden Seite des Trägers 5 ist eine zweite Reihe mit sekundären Lagersegmenten 13 vorgesehen. Wie aus den Fig. 2 und 3 zu erkennen, ist jedes Lagersegment 12 durch einen Druckgeber 14 abgestützt, der einen am Träger 5 befestigten Kolben 15 und einen im Lagersegment 12 vorgesehenen Zylinder 16 aufweist. Ein zwischen Kolben und Zylinder verbleibender Druckraum 17 ist mit zwei in Umfangsrichtung versetzten Lagertaschen 18 und 19 in der Lagerfläche 20 des Lagersegments 12 über je einen Drosselkanal 21 bzw. 22 verbunden. Jeder Kolben 15 weist zwei parallele Seitenwandflächen 23 und 24 auf, die über halbzylindrische Endflächen 25 und 26 miteinander verbunden sind. Die inneren Umfangsflächen des Zylinders 16 haben die gleiche Form, lassen jedoch ein für solche Kolben-Zylinder-Anordnungen übliches Spiel zwischen sich und dem Kolben frei. Die dort befindliche Dichtung ist nicht veranschaulicht. Der Ausdruck "Zylinder" wird hier also für einen Körper verwendet, der von einem Kreiszylinder abweicht. Die Lagerfläche 20 ist durch zwei parallele Linien 27 und 28 begrenzt, die an den Enden durch Halbkreise 29 und 30 verbunden sind. Diese Form entspricht derjenigen von Kolben 15 und Zylinder 16, ist jedoch etwas größer. Auf diese Weise können die Lagersegmente 12 im Abstand von nur wenigen Millimetern, beispielsweise etwa 2 mm, nebeneinander angeordnet werden. Die sekundären Lagersegmente 13 haben den gleichen Aufbau.

Die Druckräume 17 werden mit einer Druckflüssigkeit versorgt, die von einer Pumpe 31 über Druck-Stellglieder 32, 32a, 32b und 32c und zugehörige Leitungen 33, 33a, 33b und 33c, die sich als Bohrungen im Träger 5 fortsetzen, mit den Druckräumen 17 verbunden sind. Es sind jeweils drei primäre oder sekundäre Druckgeber als Zone zusammengefaßt. Das aus den Lagertaschen austretende Druckmittel wird über eine Ablaufleitung 34 einem Behälter 35 zugeführt, der mit einer Heizvorrichtung 36 versehen ist. Demzufolge fördert die Pumpe 31 als Druckflüssigkeit ein Heizmedium.

Im Betrieb steht eine große Querschnittsfläche im Druckraum 17 zur Verfügung, um das Lagersegment 12 in Richtung auf die Nachbarwalze 3 zu belasten. Die Belastung erfolgt durchgehend über eine verhältnismäßig große Umfangslänge dieses Lagersegments. Es lassen sich daher erhebliche Streckenlasten je Längeneinheit im Walzenspalt 2 aufbringen. Hierbei ist das Lagersegment 12 gleichmäßig belastet und vermag daher den Walzenmantel 4 über einen größeren Umfangsbereich und insbesondere auch im Bereich der Wirkebene E abzustützen. Mit Hilfe der Druck-Stellglieder 32 bis 32c läßt sich die Deformation des Walzenmantels 4 über dessen Länge sehr feinfühlig regeln, um eine genaue Anpassung an die Durchbiegung der Gegenwalze 3 zu erreichen. Die Kräfte P in der Wirkebene E können daher gut aufgenommen werden. Wenn zusätzlich Querkräfte Q auf den Walzenmantel 4 wirken sollten, werden diese wegen der Umfangserstreckung der Lagersegmente 12 und 13 auf diese Lagersegmente übertragen. Hierbei legt sich die eine Endfläche des Zylinders 16 an die entsprechende Endfläche des Kolbens 15 an, so daß diese Querkräfte zu einem erheblichen Teil auf den Träger 5 abgeleitet werden können.

Zur Verbesserung dieser Querkraftableitung können die sekundären Lagersegmente 13 unter Druck gesetzt werden, so daß der Walzenmantel 4 eingespannt ist.

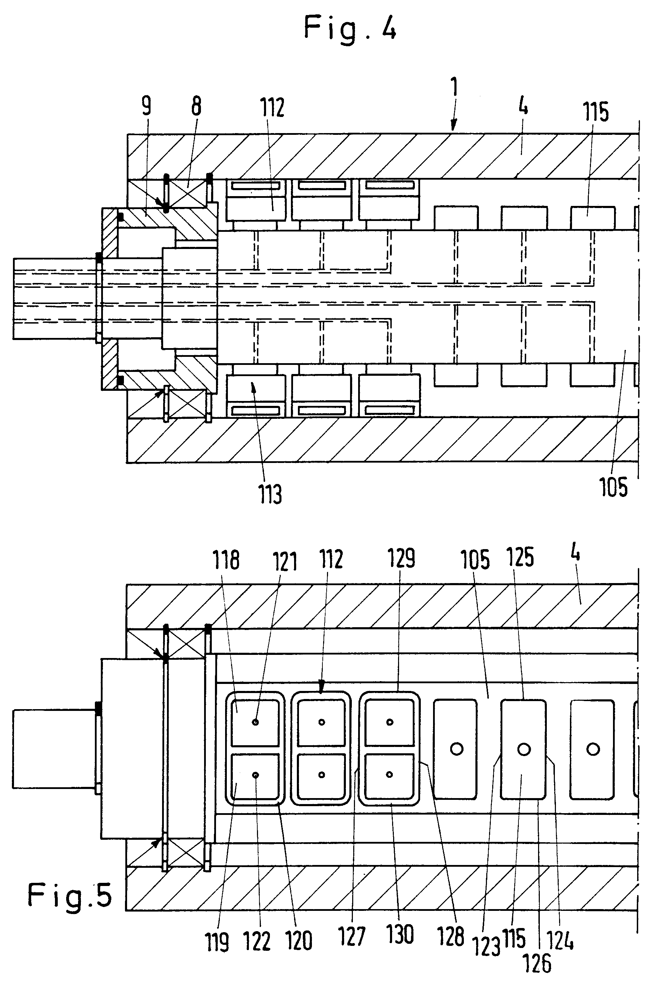

Die Ausführungsform der Fig. 4 und 5 entspricht weitgehend derjenigen der Fig. 1 bis 3. Es werden daher für gleiche Teile dieselben Bezugszeichen und für entsprechende Teile um 100 erhöhte Bezugszeichen verwendet. Der wesentliche Unterschied besteht darin, daß die Lagerfläche 120 der Lagersegmente 112 und 113 Rechteckform hat, also zwei parallele Seiten 127 und 128 sowie zwei parallele Enden 129 und 130, besitzt. Dementsprechend sind auch die Kolben mit parallelen Seitenwandflächen 123 und 124 sowie ebenfalls zueinander parallelen Endflächen 125 und 126 versehen. Die Zylinder haben die gleiche Querschnittsform. Auf diese Weise ergibt sich die größtmögliche Druckfläche in jedem Druckgeber.

Von den veranschaulichten Ausführungsbeispielen kann in vielfacher Hinsicht abgewichen werden, ohne den Grundgedanken der Erfindung zu verlassen. Beispielsweise können die Enden des Walzenmantels 4 fest am Träger 5 gelagert sein. Man kann auch eine rechteckige Lagerfläche 120 mit einem Druckgeber kombinieren, desssen Kolben die Form des Kolbens 15 hat. Es kann auch der Kolben jeweils am Lagersegment ausgebildet oder angebracht sein und in einen Zylinder greifen, der im Träger 5 vorgesehen ist.

**Patentansprüche**

1. Deformationsregelwalze mit einem drehfest gehaltenen Träger (5), auf dem ein ihn umgebender drehbarer Walzenmantel (4) mit Hilfe von hydrostatischen Lagersegmenten (12, 13; 112, 113) abgestützt ist, die axial nebeneinander angeordnet sind, die je durch nur einen Druckgeber (14) mit einen Druckraum (17) zwischen sich bildenden Kolben (15; 115) und Zylinder (16) auf dem Träger abgestützt sind und die in ihren Lagerflächen (20) mindestens zwei in Umfangsrichtung des Walzenmantels versetzte Lagertaschen (18, 19) aufweist, die über Drosselkanäle (21, 22) mit dem jeweiligen Druckraum (17) verbunden sind, dadurch gekennzeichnet, daß die Umfangslänge der Lagersegmente (12, 13; 112, 113) größer ist als ihre jeweilige axiale Breite, daß die Druckgeber (14) die Lagersegmente (12, 13; 112, 113) durchgehend über den weitaus größten Teil der Umfangslänge unterstützen, indem der Querschnitt von Kolben (15; 115) und Zylinder (16) eine Umfangslänge hat, die größer als die axiale Breite ist, und daß die Umfangsflächen von Kolben (15; 115) und Zylinder (16) die gleiche Form haben.

**2.** Deformationsregelwalze nach Anspruch 1, dadurch gekennzeichnet, daß Kolben (15; 115) und Zylinder (16) in Umfangsrichtung verlaufende parallele Seitenwandflächen (23, 24; 123, 124) aufweisen.

**3.** Deformationsregelwalze nach Anspruch 2, dadurch gekennzeichnet, daß die Seitenwandflächen (23, 24) von Kolben (15) und Zylinder (16) durch halbzylindrische Endflächen miteinander verbunden sind.

**4.** Deformationsregelwalze nach Anspruch 2, dadurch gekennzeichnet, daß die Seitenwandflächen (123, 124) von Kolben (115) und Zylinder im wesentlichen durch zur Trägerachse parallele Endflächen (125, 126) miteinander verbunden sind.

**5.** Deformationsregelwalze nach einem der Ansprüche 1 bis 4, dadurch gekennzeichnet, daß die Querschnittsform von Kolben (15, 115) und Zylinder (16) in Form und Größe der Lagerfläche (20, 120) des Lagersegments (12, 112) angepaßt ist.

**6.** Deformationsregelwalze nach einem der Ansprüche 1 bis 5, dadurch gekennzeichnet, daß zumindest über einen Teil der Länge des Trägers (5; 105) auf der den Lagersegmenten (12; 112) gegenüberliegenden Trägerseite sekundäre Lagersegmente (13; 113) vorgesehen sind.

**7.** Deformationsregelwalze nach einem der Ansprüche 1 bis 6, dadurch gekennzeichnet, daß der Kolben (15; 115) jeweils am Träger (5; 105) und der Zylinder (16) am Lagersegment (12; 112) vorgesehen ist.

**8.** Deformationsregelwalze nach einem der Ansprüche 1 bis 7, dadurch gekennzeichnet, daß der die Druckgeber (14) beaufschlagende Druck einzeln oder zonenweise veränderbar ist.

**9.** Deformationsregelwalze nach einem der Ansprüche 1 bis 8, dadurch gekennzeichnet, daß die den Lagersegmenten (12, 13; 112, 113) zugeführte Druckflüssigkeit ein Heizmedium ist.

## Claims

**1.** Controlled-deformation roll with a non-rotatably mounted support (5) on which a surrounding rotatable roll shell (4) is supported by means of hydrostatic bearing segments (12, 13; 112, 113) which are arranged axially adjacent to each other, which are each supported on the support by only one pressure transducer (14) with a piston (15; 115) and cylinder (16) forming a pressure chamber (17) between them, and which in their bearing surfaces (20) comprise two or more bearing recesses (18, 19) offset in the circumferential direction of the roll shell, which are connected to the respective pressure chamber (17) by throttle channels (21, 22), characterised in that the circumferential length of the bearing segments (12, 13; 112, 113) is greater than their respective axial width, that the pressure transducers (14) support the bearing segments (12, 13; 112, 113) continuously over by far the greatest proportion of the circumferential length, by the cross-section of piston (15; 115) and cylinder (16) having a circumferential length which is greater than the axial width, and that the circumferential surfaces of piston (15; 115) and cylinder (16) have the same shape.

**2.** Controlled-deformation roll according to claim 1, characterised in that piston (15; 115) and cylinder (16) comprise parallel side wall surfaces (23, 24; 123, 124) extending in a circumferential direction.

**3.** Controlled-deformation roll according to claim 2, characterised in that the side wall surfaces (23, 24) of piston (15) and cylinder (16) are connected to each other by semi-cylindrical end faces.

**4.** Controlled-deformation roll according to claim 2, characterised in that the side wall surfaces (123, 124) of piston (115) and cylinder are connected to each other essentially by end faces (125, 126) parallel to the support axis.

**5.** Controlled-deformation roll according to any of claims 1 to 4, characterised in that the cross-sectional shape of piston (15, 115) and cylinder (16) is adapted in shape and size to the bearing surface (20, 120) of the bearing segment (12, 112).

**6.** Controlled-deformation roll according to any of claims 1 to 5, characterised in that secondary bearing segments (13; 113) are provided at least over a portion of the length of the support (5; 105) on the side of the support opposite the bearing segments (12; 112).

**7.** Controlled-deformation roll according to any of claims 1 to 6, characterised in that the piston (15; 115) is respectively provided on the support (5; 105) and the cylinder (16) on the bearing segment (12; 112).

8. Controlled-deformation roll according to any of claims 1 to 7, characterised in that the pressure acting on the pressure transducers (14) is variable individually or in zones.

9. Controlled-deformation roll according to any of claims 1 to 8, characterised in that the pressure fluid supplied to the bearing segments (12, 13; 112, 113) is a heating medium.

**Revendications**

1. Cylindre à déformation réglable comportant un support (5) maintenu fixe en rotation, sur lequel s'appuie à l'aide de segments de paliers hydrostatiques (12, 13; 112, 113), une enveloppe de cylindre (4) rotative qui entoure le support, les segments de paliers hydrostatiques étant disposés côte à côte axialement, s'appuient chacun sur le support par un seul générateur de pression (14) comportant un piston (15; 115) et un cylindre (16) formant entre-eux une chambre de pression (17), et présentent dans leurs surfaces de palier (20) au moins deux cavités de palier (18, 19) décalées dans la direction périphérique de l'enveloppe de cylindre et reliées à la chambre de pression respective (17) par l'intermédiaire de canaux d'étranglement (21, 22), caractérisé en ce que la longueur périphérique des segments de paliers (12, 13; 112, 113) est supérieure à leur largeur axiale respective, en ce que les générateurs de pression (14) soutiennent les segments de paliers (12, 13; 112, 113) de bout en bout sur la plus grande partie de la longueur périphérique par le fait que la section transversale des pistons (15; 115) et cylindres (16) présente une longueur périphérique qui est supérieure à la largeur axiale, et en ce que les surfaces périphériques des pistons (15; 115) et cylindres (16) ont la même forme.

2. Cylindre à déformation réglable selon la revendication 1, caractérisé en ce que les pistons (15; 115) et cylindres (16) présentent des surfaces de paroi latérale (23, 24; 123, 124) s'étendant en direction périphérique.

3. Cylindre à déformation réglable selon la revendication 2, caractérisé en ce que les surfaces de paroi latérale (23, 24) des pistons (15) et cylindres (16) sont reliées entre-elles par des surfaces d'extrémité demi-cylindriques.

4. Cylindre à déformation réglable selon la revendication 2, caractérisé en ce que les surfaces de paroi latérale (123, 124) des pistons (115) et cylindres (16) sont reliées entre-elles par des surfaces d'extrémité (125, 126) sensiblement parallèles à l'axe du support.

5. Cylindre à déformation réglable selon l'une des revendications 1 à 4, caractérisé en ce que la forme de la section transversale des pistons (15, 115) et cylindres (16) est adaptée en forme et en grandeur à la surface de palier (20, 120) du segment de palier (12, 112).

6. Cylindre à déformation réglable selon l'une des revendications 1 à 5, caractérisé en ce qu'au moins sur une partie de la longueur du support (5; 105), des segments de paliers secondaires (13; 113) sont prévus sur le côté du support opposé aux segments de paliers (12; 112).

7. Cylindre à déformation réglable selon l'une des revendications 1 à 6, caractérisé en ce que le piston (15; 115) est respectivement prévu sur le support (5; 105) et le cylindre (16) sur le segment de palier (12; 112).

8. Cylindre à déformation réglable selon l'une des revendications 1 à 7, caractérisé en ce que la pression sollicitant les générateurs de pression (14) peut être modifiée individuellement ou par zones.

9. Cylindre à déformation réglable selon l'une des revendications 1 à 8, caractérisé en ce que le fluide de pression alimentant les segments de paliers (12, 13; 112, 113) est un agent de chauffage.

Fig.1

EP 0 258 478 B1

Fig.2

Fig.3

# Fig. 4

# Fig.5